# EUROPEAN PATENT SPECIFICATION

(11) **EP 1 315 677 B1**
(45) Date of publication and mention of the grant of the patent: **28.04.2004**
(21) Application number: 01960963.5
(22) Date of filing: 24.08.2001
(51) Int. Cl.: C02F 1/48, C02F 1/00

(54) **FLUID TREATMENT**
BEHANDLUNG VON FLÜSSIGKEITEN
TRAITEMENT DE FLUIDE

(30) Priority: 24.08.2000 GB 0020874
(43) Date of publication of application: 04.06.2003
(73) Proprietor: IMI VISION LIMITED, Alcester, Warwickshire B49 6EU (GB)
(72) Inventor: Johnson, Martin, Stanley, Leamington Spa Warwickshire CV33 0PU (GB)
(74) Representative: Wightman, David Alexander
(86) International application number: PCT/GB2001/003834
(87) International publication number: WO 2002/016270

(56) References cited:
- EP-A- 0 691 526
- DE-A- 3 433 417
- FR-A- 2 665 795
- PATENT ABSTRACTS OF JAPAN vol. 1998, no. 14, 31 December 1998 (1998-12-31) -& JP 10 244265 A (KINOUSUI KENKYUSHO:KK), 14 September 1998 (1998-09-14)
- DATABASE WPI Section Ch, Week 9741 Derwent Publications Ltd., London, GB; Class D03, AN 1997-435936 XP002184352 YIN J: "Magnetised mineral drink" -& CN 1 115 621 A (YIN J), 31 January 1996 (1996-01-31)

## Description

This invention relates to polarised fluids, in particular water, i.e. water that has been polarised to a greater or less extent by exposure to a magnetic field, and is particularly concerned to provide an apparatus in which water, or other fluid, can be polarised and the degree of polarisation achieved is monitored.

There are a number of known uses for polarised water but means satisfactorily to measure and monitor the levels of polarisation up to saturation level are still required.

For example, it is known that magnetic flux levels required to achieve saturation are different for different waters. For flowing water, the flow rate and time in the magnetic field both influence the degree of polarisation achieved. Moreover, the polarisation decays with time and may be affected by shearing, temperature change and other factors. Re-magnetising of polarised water may have a cumulative effect or only the same saturation level may be reached. Passing polarised water through a highly random magnetic field may reduce the polarisation level. The effect of mixing polarised water with other fluids, e.g. beverage concentrates, non-polarised water or carbon dioxide, is not by any means fully understood.

Thus it will be appreciated that an apparatus through which water or other fluid can be passed to achieve a desired polarisation level would provide considerable benefits and, accordingly, it is an object of the present invention to provide such an apparatus.

According to the present invention there is provided apparatus to control polarisation of a fluid, the apparatus comprising a magnetic source for applying a magnetic field to a fluid for adjusting the polarisation level of the fluid, and means for controlling the effect of the magnetic source to achieve a desired polarisation level of the fluid.

As indicated above, the fluid will preferably be water or water-based and the invention will be further described herein with specific reference to water. It will be understood, however, that the invention is not limited to adjusting the polarisation level of water and that the invention can be used for a wide range of fluids in a variety of different applications.

The magnetic source may comprise one or more permanent magnets but more preferably, the magnetic source comprises one or more electromagnets that can be selectively energised according to any requirements.

The control means may be operable to vary the magnetic field applied to the water by the magnetic source. Alternatively or additionally, the control means may be operable to vary the flow and thus the exposure time of the water to the magnetic field.

The control means may be operable in response to signals input from more sensors for detecting polarisation levels of the water before and after treatment.

In a preferred arrangement, the present invention provides an apparatus to polarise a fluid, the apparatus comprising an inlet for incoming fluid, an outlet for outgoing fluid, a first (inlet) sensor to measure the polarisation of the incoming fluid, a magnetic source, downstream of the inlet sensor, through which the fluid flows, and a second (outlet) sensor downstream of the magnetic source to measure the polarisation of the outgoing fluid, the sensors being connected to a pre-programmed controller which can adjust the level of magnetic input into the fluid to achieve a desired level at the second (outlet) sensor.

The controller may be pre-set to achieve a particular desired final polarisation for the outgoing water depending on the intended usage and benefits required. Re-circulation means may therefore, be provided to pass the treated water again through the magnetic source for as many times as is necessary until the desired polarisation level is achieved.

The inlet water supply where appropriate may conveniently be bench-marked for residual polarisation level.

The magnetic source may be an electromagnetic unit. It may fully envelope or partially cover the water flow line. Its coils may be in single or multiple circuits. The controller may switch the coils into a single continuous field or may ripple signals through the water in series to provide a magnetic field moving at relative speed to the water (ripple field control). The magnetic field may move in the same or opposite direction to the fluid flow. The output variations of the electromagnet may be a combination of voltage size, pulsing frequency, physical proximity and field direction/sequencing.

If desired, the magnetic field may be provided by a permanent magnet with polarisation control. This may be achieved by varying the flow rate and re-circulation time or the location of the magnet relative to the water passage. A combination of permanent and electromagnets may be used.

The apparatus may have a flow rate sensor which may be connected to the controller to indicate "flow" and "no flow" conditions and to provide flow rate information. It may detect and measure flow rate, mass flow and temperature. It may be, for example, a Tri-sensor (MEMS) type.

A valve may be provided to control flow of water through the apparatus. The valve may be any suitable type, e.g. mechanical or electrical. It may be manually or automatically activated when a supply of treated water is required. The valve may be provided at the inlet or outlet or any other suitable position therebetween.

In addition to controlling flow on or off, the valve may regulate or pulse flow and may provide an output signal to the controller. It may be designed to modulate flow in response to input from the flow rate sensor and the controller. For example, the valve may be an on/off flow modulating solenoid valve.

The first (inlet) sensor, as indicated above, measures the polarisation level of the incoming water. It may use one of a variety of possible sensing technologies based on comparative or absolute polarisation values. It may be connected to provide output both to the controller and to the second (outlet) sensor.

The second (outlet) sensor, which is monitoring the polarisation level of the treated water, may signal to the controller to dispense or to recirculate the water depending on whether or not the desired polarisation level has been achieved. If desired, it may display a signal to indicate that the desired level has been achieved.

The apparatus may be employed in a beverage dispenser to provide a supply of treated water for dispense separately or mixed with one or more further fluid streams. For example, the outlet for treated water may be connected to a simple flow nozzle or include fluid flow straightening features. The nozzle may be a mixing nozzle to incorporate one or more further fluid streams. Thus, for example, the polarised water may be used to dilute a concentrate or syrup to form a so-called "post-mix" beverage at the point of dispense.

For use with water or other input fluid that has a naturally low level of polarisation or has a low polarisation saturation level, the apparatus may be provided with an injection means to inject suitable ions at a position downstream of the first (inlet) sensor, thereby modifying the magnetic properties of the water.

Such "booster" ions may be allowed to remain in the outlet water or they may be partially or wholly removed, e.g. at a position between the second (outlet) sensor and the outlet. Suitable booster ions include ferrous ions and other minerals. The second (outlet) sensor may also be used to provide feedback on the level of booster ions.

Should the final polarisation level vary outside pre-set, desired limits, the controller may vary the fluid flow rate or change the linear speed of the electromagnetic field (ripple field control).

If it is desired to neutralise any residual polarisation in the inlet water or other fluid, it may be passed through a mechanical shearing or atomising device such as a sieve prior to polarisation treatment.

Similarly, where the incoming water or other fluid has a natural high level or polarisation, the controller may induce a random magnetic field to the magnetic source to reduce the polarisation.

The electro-magnetic field may be activated when flow starts and may be off or at a low maintenance level when the apparatus is in "sleep" mode.

The magnetic field may be influenced by the presence of gas bubbles or absorbed gas in the water and, if desired, gas bubbles may be introduced, e.g. between the first (inlet) sensor and the magnet, to enhance the achievable final polarisation level.

The apparatus may be part of a cooling/heating system where the fluid temperature is deliberately increased or decreased in order to maximise the final polarisation level.

The invention provides a means of achieving a predictable and adjustable polarisation level in a fluid. For example, mains water has a wide variety of saturation polarisation levels and the invention provides an active system whereby a variety of sources can be engineered to a particular final polarisation level.

The dynamic nature of the magnetic system can cater for a wide range of flow rates and the apparatus allows for a "customised" final polarisation level which may be selected differently on every dispense.

The apparatus can rapidly and accurately detect and adjust for varying inlet fluid conditions.

Thus control of final polarisation level allows for a wide variety of end use applications and the addition of active ions can boost the final polarisation level to increase the range of output levels possible.

The apparatus may be employed in continuous or batch type processes including the option of re-circulating the fluid to achieve the desired polarisation level.

Embodiments of the invention are illustrated in the accompanying drawings in which:
**Figure 1** is a schematic arrangement of a first embodiment of apparatus according to the invention;
**Figure 2** is a schematic arrangement of a second embodiment of apparatus according to the invention;
**Figure 3** is a schematic arrangement of a third embodiment of apparatus according to the invention;
**Figure 4** is a schematic arrangement of a fifth embodiment of apparatus according to the invention;

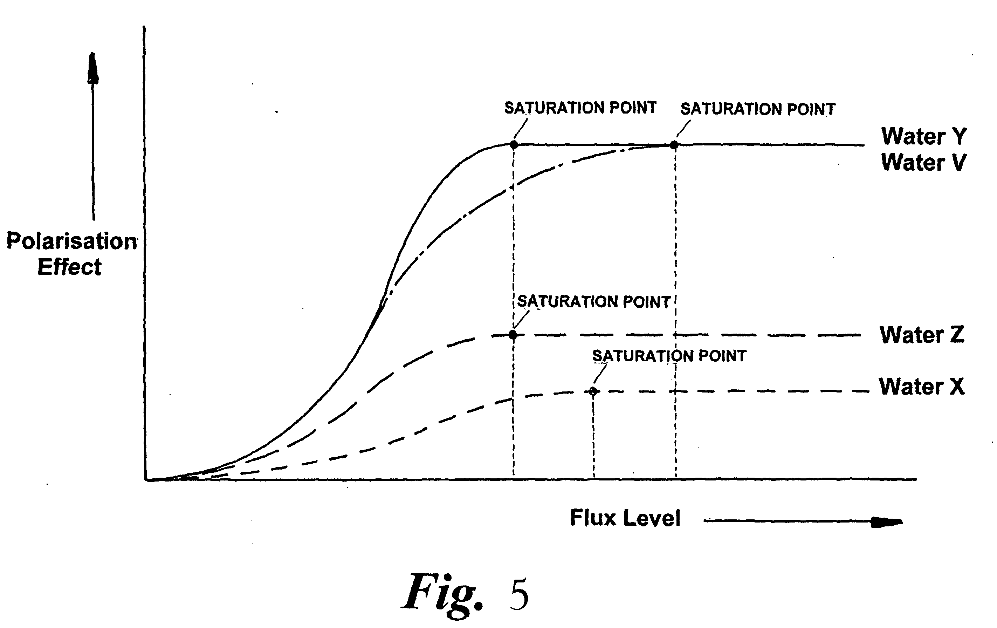

**Figure 5** is a graph showing typical polarisation effects on different waters; and
**Figure 6** is a graph showing the effects of flux levels on Calmoduli rate.

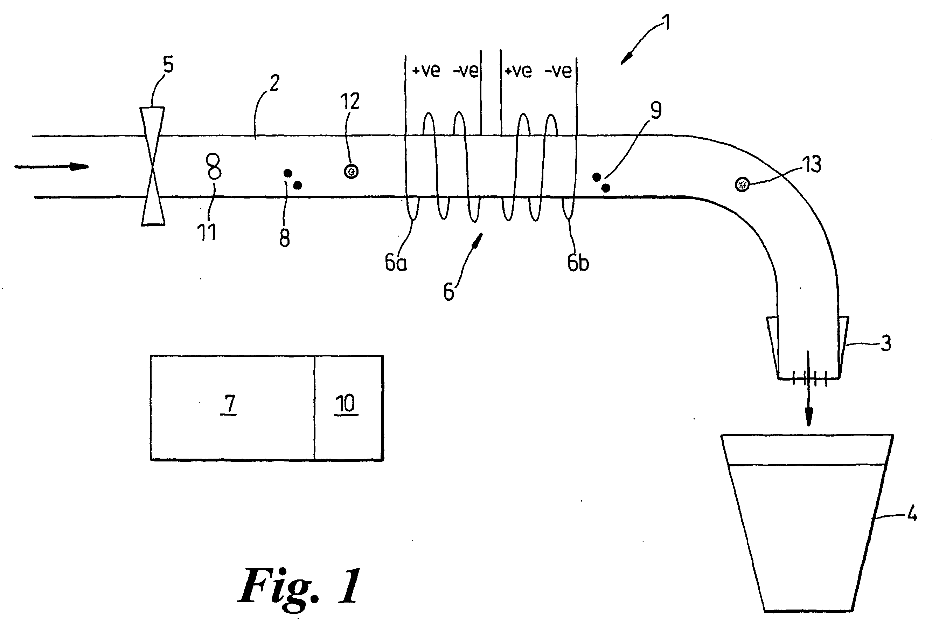

Referring to Figure 1 of the accompanying drawings, there is shown a first embodiment of apparatus 1 according to the invention for controlling the polarisation level of water supplied in a pipe 2 to a nozzle 3 of a post-mix beverage dispenser (not shown).

In known manner, the water is mixed with a concentrate or syrup supplied to the nozzle 3 to form a beverage for dispense into a cup 4 or other suitable container. A plurality of different concentrates or syrups may be supplied in different lines to the nozzle 3 for user selection of a desired beverage. Such post-mix beverage dispensers are well known in the art and will not described further herein as they form no part of this invention.

The apparatus 1 includes an on/off flow modulating solenoid valve 5 for controlling flow of water to the dispense nozzle 3 and a magnetic source 6 downstream of the valve 5 for altering the polarisation level of the incoming water.

In this embodiment, the magnetic source 6 comprises first and second electromagnetic coils 6a,6b disposed in series around the pipe 2 for generating a magnetic field to alter the polarisation level of the water flowing through the pipe 2.

The inlet valve 5 and magnetic source 6 are controlled by a control system 7 including a programmable microprocessor controller.

The apparatus 1 further includes an inlet (first) sensor 8 positioned before the magnetic source 6 and an outlet (second) sensor 9 positioned after the magnetic source 6. The inlet sensor 8 monitors the polarisation level of the incoming water and the outlet sensor 9 monitors the final polarisation level of the outgoing water supplied to the nozzle 3.

Both the inlet sensor 8 and the outlet sensor 9 provide information of the polarisation level of the water to the control system 7. The outlet sensor 9 is also connected to a display 10 for displaying the final polarisation level of the water to be dispensed and/or providing a visual or audible indication when the polarisation level of the water to be dispensed has reached a desired value.

The apparatus 1 also includes a flow rate sensor 11 between the valve 5 and the inlet sensor 8 for providing information of "flow" and "no-flow" conditions and flow rate to the control system 7. The flow rate sensor 11 may be of any suitable type but in this embodiment is a TriSensor (MEMS) type which monitors and provides information to the control system of the mass flow and temperature of the water in addition to the flow rate.

The apparatus 1 further includes an injection port 12 between the inlet sensor 8 and the magnetic source 6 and a collator port 13 downstream of the outlet sensor 9. The injection port 12 is used to add ions, for example ferrous ions, into the water to modify the magnetic properties of the incoming water prior to exposure to the magnetic source 6. The collator port 13 is used to remove the added ions wholly or partially from the outgoing treated water prior to delivery to the nozzle 3. The addition/removal of such ions may be provided by the control system 7 when the incoming water has a natural low level of polarisation or a low polarisation saturation level.

Operation of the apparatus 1 is as follows. When a user selects a beverage to be dispensed, the control system 7 sends a signal to open the inlet valve 5 and allow water to flow through the pipe 2. The flow rate sensor 11 detects the flow and sends a signal representative of the flow rate to the control system 7.

The inlet sensor 8 measures the polarisation level of the incoming water and sends a signal to the control system 7 representative of the absolute polarisation level or the comparative polarisation level with respect to a desired final polarisation level. The control system 7 controls the magnetic field generated by the coils 6a,6b and/or the flow rate to generate the desired final polarisation level in the outgoing water.

The outlet sensor 9 monitors the final polarisation level of the outgoing water and the control system 7 is responsive to differences between the detected final polarisation level and the desired final polarisation level to vary the magnetic field and/or flow rate to achieve the desired final polarisation level.

The control system 7 controls operation of the magnetic source to vary the output of the coils 6a,6b by a combination of voltage size, pulsing frequency, physical proximity and field direction/sequencing to produce the required magnetic field. One or both coils 6a,6b may be energised to provide a magnetic field that is continuous or moving at relative speed to the water (ripple field control).

If the incoming water has a low polarisation level or a low saturation polarisation level, booster ions are added via injection port 12 under the control of the control system 7 to alter the magnetic properties of the water and enable the desired polarisation level to be achieved. The booster ions can be allowed to remain in the water after treatment or can be wholly or partially removed via the collator port 13 under the control of the control system 7. For some applications, the addition/removal of booster ions may not be required and the ports 12,13 may be omitted. Alternatively, or additionally, the ports 12,13 may be used for modifying other properties of the water to be dispensed by the addition or removal of appropriate agents to achieve the desired property.

If the incoming water has a naturally high level of polarisation, a random magnetic field may be generated by the magnetic source 6 under the control of the control system 7 to reduce the polarisation of the water to a lower level.

In this way, the control system 7 responds to the polarisation level of the incoming water and continuously adjusts one or more of the flow rate of the water, the magnetic field and the addition of booster ions to achieve and maintain within pre-set limits the desired final polarisation level in the outgoing water.

On completion of the dispense, the control system 7 closes the valve 5 to stop the flow of water. The magnetic source 6 may be switched off or left in a "sleep mode" to maintain the desired final polarisation level of the water remaining in the apparatus for the next dispense.

The controller may be programmed with a pre-set final polarisation level on installation of the apparatus. Alternatively, the control system may allow the user to input a desired final polarisation level for each dispense.

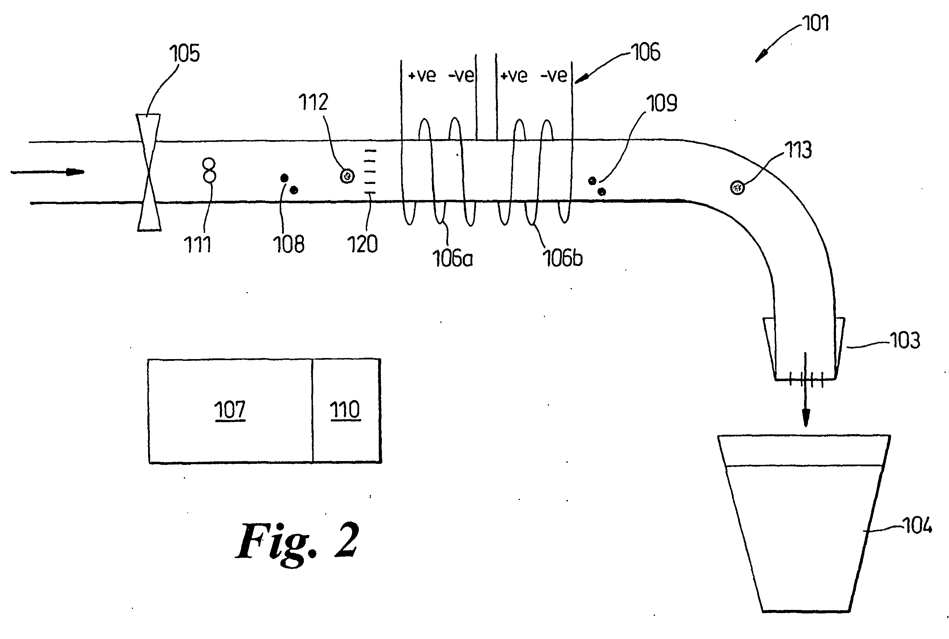

Referring now to Figure 2 of the drawings, there is shown a second embodiment of apparatus according to the invention. The second embodiment is generally similar to the first embodiment and for convenience like reference numerals in the series 100 are used to indicate corresponding parts.

In the second embodiment, the apparatus 101 further includes an inlet sieve 120 or similar device between the inlet sensor 108 and the magnetic source 106. The sieve 120 subjects the water to mechanical shearing which can be used to neutralise residual polarisation in the incoming water prior to treatment. This may eliminate the effect of variations in the polarisation of the incoming water on the operation of the apparatus. In other respects, the operation of this embodiment is similar to that of the first embodiment and will be understood from the description hereinbefore. In a modification (not shown), an outlet sieve may be provided after the outlet sensor 109 to reduce the polarisation of the outgoing water.

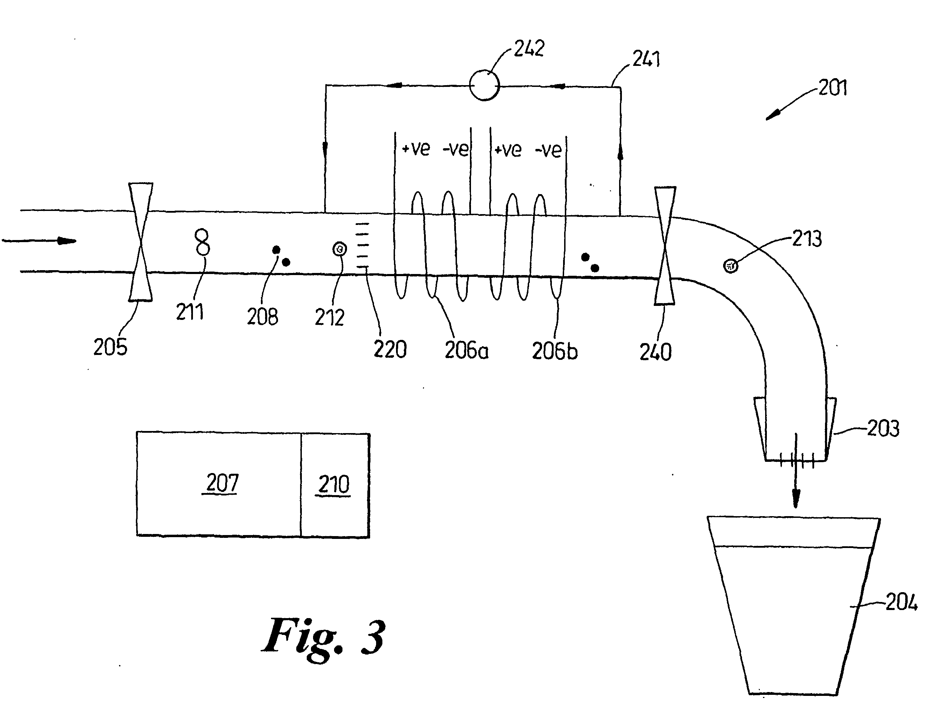

A third embodiment of apparatus according to the invention is shown in Figure 3 of the drawings. For convenience, like reference numerals in the series 200 are used to indicate parts of this embodiment corresponding to the previous embodiments

In this embodiment, a valve 240 is provided downstream of the outlet sensor 209 and a re-circulation loop 241 having a pump 242 is provided for re-circulating the water through the magnetic source 206. The outlet valve 240 is an on/off solenoid control valve and flow rate is controlled by the valve 205 as described previously. It will be understood, however, that valve 205 could be omitted and the valve 240 could be an on/off flow modulating solenoid valve.

In use, the apparatus 201 is activated by user selection of a beverage to be dispensed from nozzle 203. The valve 240 is closed and the water is re-circulated in loop 241 through the magnetic source 206 until the polarisation level of the water detected by the outlet sensor 209 reaches the desired final polarisation level. The valve 240 is then opened by the control system 207 allowing the treated water to flow to the dispense nozzle 203.

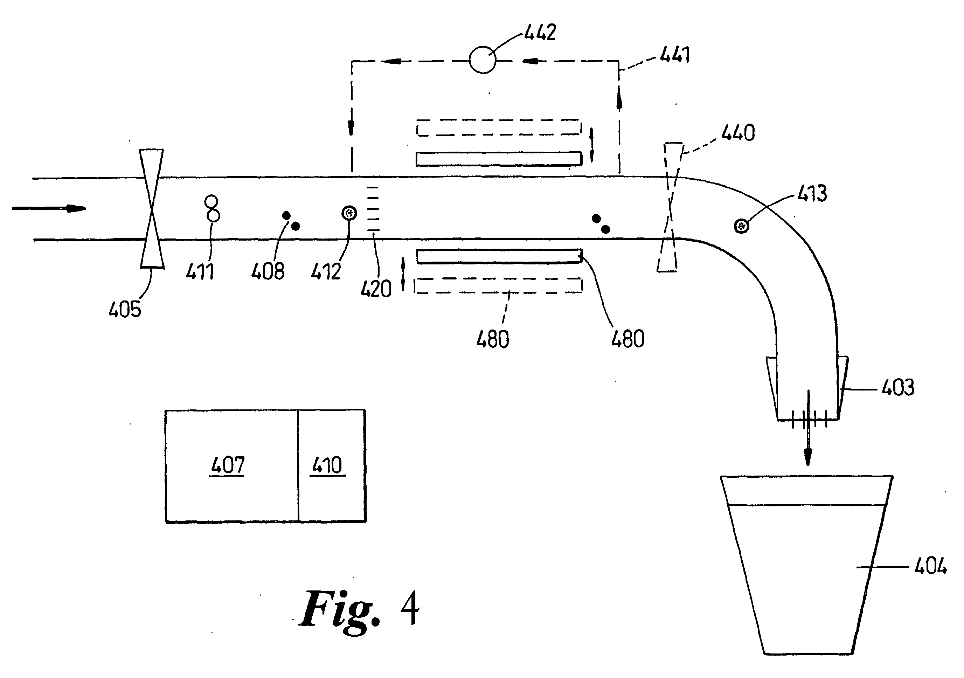

With reference now to Figure 4 of the drawings, a fifth embodiment of apparatus according to the invention is shown. For convenience, like reference numerals in the series 400 are used to indicate parts corresponding to the previous embodiments.

In this embodiment, the magnetic source 406 comprises a permanent magnet 480 in place of the electromagnetic coils. The desired polarisation level of the water is achieved by adjusting the flow rate of the water and/or the location of the permanent magnet 480. In a modification shown in dotted lines, a valve 440 and re-circulation loop 441 with a pump 442 are provided similar to the third embodiment for re-circulating the water until the desired polarisation level is achieved.

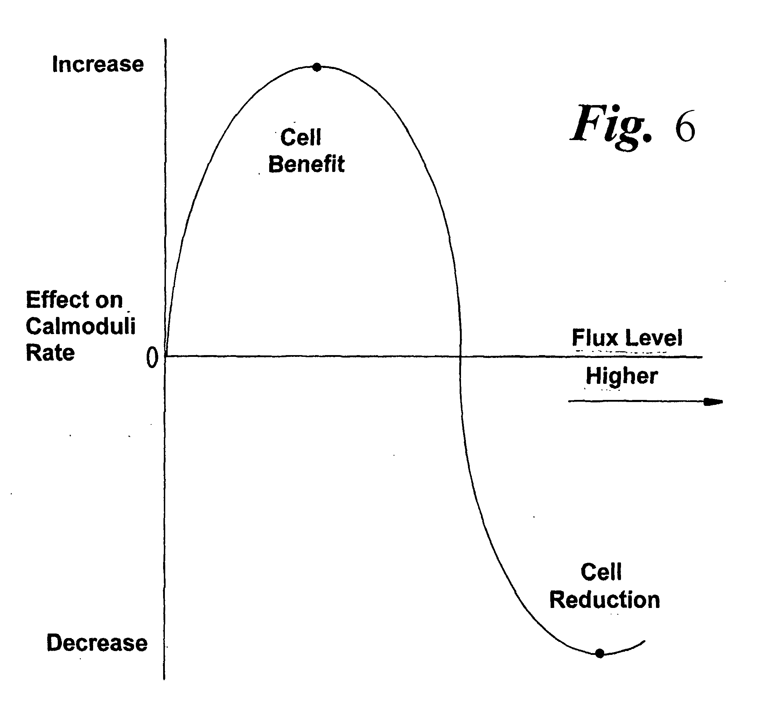

As will be apparent from the foregoing description of exemplary embodiments, the invented water polarisation apparatus provides the benefits of a device that polarises water in an adjustable and predictable manner. The apparatus can be used with a mains water supply which has a wide variety of polarisation levels and requires an active system to engineer all sources to a known final polarisation level. Figure 6, shows the variation of polarisation effect with flux level for different water supplies. As shown different water supplies may reach the same saturation level at different flux levels (Waters Y and V), or different saturation levels at the same flux level (Waters Y and Z) or different saturation levels at different flux levels (Waters Z and X). The addition of booster ions increases the range of obtainable final polarisation levels. The dynamic electromagnet caters for a range of flow rates obtained from a mains water supply. The apparatus allows a user to customise the final polarisation level to a desired level which may vary from user to user. The apparatus is able to react to varying inlet conditions which affect the polarisation conditions of the water.

Active control of polarisation levels may be employed in a wide variety of applications. For example, variation of the polarisation level affects the structure and function of cellular membranes and may be used to influence various physiological functions of micro-organisms that occur in water supplies to achieve beneficial results. Thus, Calmoduli Rate is a measure of cell wall penetration by calcium ions. The potential between a cell and any ions in the surrounding fluid is critical on the outer slipping layer of the cell (measured as Zeta potential). The Zeta potential (+ve or -ve) affects the attraction or otherwise of these ions. As calcium ions are attracted to the outer cell wall, some adhere to the outer membrane and others penetrate through into the cell core. This permeation rate is referred to as the Calmoduli Rate and depends on the nature of the external ions, the Zeta potential and the condition of the cell outer membrane. It is also conceivable that the change of Calmoduli Rate varies with time when stimulated by artificial changes in Zeta potential.

It is envisaged that there are certain critical levels in the polarisation of the water (flux level) where the Calmoduli Rate is increased dramatically or reduced dramatically. This is crucial to survival and growth of micro-organisms. Figure 6 shows the effect of flux level on Calmoduli Rate and indicates an optimisation of positive benefit to cell growth may be achieved when the Calmoduli Rate is increased by a focussing of the flux level in a lower range. Beyond a critical point, however, the number of calcium ions being attracted to the outer wall reduces the permeation rate by limiting the entry of calcium ions into and the expulsion of toxins out of the cell structure. It will be appreciated that calcium ions are seen as path-finders for other minerals. The greater the penetration of calcium ions, the greater the penetration of potassium, sodium etc needed for other cells functions. Thus, reducing the Calmoduli Rate by a focussing of the flux level in a higher range causes a negative effect on cell growth that may even cause it to die.

It will also be understood that other modifications and improvements to the apparatus are possible as will be apparent to those skilled in the art. For example, features of any of the embodiments may be employed separately or in combination with features of any of the other embodiments

Although the invention has been described with particular reference to post-mix beverage dispensers, it will be appreciated the invention is not limited to such use and the apparatus may be used in pre-mixed beverage dispensers for adjusting the polarisation level of a dispensed, pre-mixed beverage.

Other applications and uses of the invention will be apparent to those skilled in the art.

## Claims

1. An apparatus to polarise a fluid, the apparatus comprising a fluid inlet for incoming water, a fluid outlet for outgoing water, a first sensor to measure the polarisation of the incoming fluid, a magnetic source, downstream of the inlet sensor, through which the fluid flows, and a second sensor downstream of the magnetic source to measure the polarisation of the outgoing fluid, the sensors being connected to a pre-programmed controller which can adjust the level of magnetic input into the fluid to achieve a desired level at the outlet sensor.

2. An apparatus according to Claim 1, which includes re-circulation means to pass the treated fluid one or more times through the magnetic source to achieve the desired polarisation level.

3. An apparatus according to Claim 1 or 2, in which the magnetic source is an electromagnetic unit.

4. An apparatus according to any one of the preceding Claims, in which the magnetic source completely envelopes the fluid flow lines.

5. An apparatus according to any one of the preceding Claims, in which the magnetic source has coils in single or multiple circuits and the controller is programmed to switch the coils into a single continuous field or to ripple signals through the fluid in series.

6. An apparatus according to Claim 1 or 2, in which the magnetic source is a permanent magnet with polarisation control.

7. An apparatus according to any one of Claims 3 to 6, in which the magnetic source is a combination of permanent and electromagnets.

8. An apparatus according to any one of the preceding Claims, which includes a flow rate sensor upstream of the magnetic source.

9. An apparatus according to Claim 8, in which the flow rate sensor indicates "flow" and "no flow" conditions to the controller.

10. An apparatus according to any one of the preceding Claims, in which the inlet sensor provides information both to the controller and to the outlet sensor.

11. An apparatus according to any one of the preceding Claims, in which a valve is provided to control flow through the apparatus.

12. An apparatus according to Claim 11, in which the valve is adjustable to vary flow rate through the apparatus.

13. An apparatus according to Claim 12, in which the valve is an on/off flow modulating valve.

14. An apparatus according to any one of the preceding Claims, in which the outlet for the polarised fluid is a mixing nozzle which can receive one or more further fluid streams.

15. An apparatus according to Claim 14, in which the polarised fluid is water which can be mixed with a concentrate received in the mixing nozzle as a further fluid stream to provide a post-mix beverage.

16. An apparatus according to any one of the preceding Claims, which includes injection means downstream of the inlet sensor to inject ions to modify the magnetic properties of the fluid.

17. An apparatus according to Claim 16, which includes means to remove the ions between the outlet sensor and the outlet.

18. An apparatus according to Claim 16 or 17, in which the outlet sensor provides feedback to the controller on the level of the ions.

19. An apparatus according to any one of the preceding Claims, in which where the polarisation level of the fluid at the outlet sensor is outside pre-set limits, the controller may vary the fluid flow rate or change the linear speed of the magnetic field.

20. An apparatus according to any one of the preceding Claims, which includes means to neutralise polarisation in the inlet fluid.

21. An apparatus according to Claim 20, in which the means comprises mechanical shearing or atomising.

22. An apparatus according to any one of the preceding Claims, in which the controller may introduce a random magnetic field to the magnetic source to reduce polarisation levels.

23. An apparatus according to any one of Claims 1 to 5 and 8 to 22, in which the electromagnetic field is activated when flow starts and is otherwise switched off or at a low maintenance level.

24. An apparatus according to any one of the preceding Claims, which includes means to introduce gas bubbles into the fluid between the inlet sensor and the magnetic source.

25. An apparatus according to Claim 1, in which a valve is provided downstream of the magnetic source and the controller is operable to open the valve when the desired final polarisation level is achieved.

## Patentansprüche

1. Vorrichtung zum Polarisieren einer Flüssigkeit, wobei die Vorrichtung einen Flüssigkeitseinlass für einströmendes Wasser, einen Flüssigkeitsauslass für ausströmendes Wasser, einen ersten Sensor zum Messen der Polarisation der einströmenden Flüssigkeit, eine Magnetquelle stromabwärts des Einlasssensors, durch welche die Flüssigkeit fließt und einen zweiten Sensor stromabwärts der Magnetquelle zum Messen der Polarisation der ausströmenden Flüssigkeit aufweist, wobei die Sensoren an ein vorprogrammiertes Steuergerät angeschlossen sind, welches das Niveau der magnetischen Einspeisung in die Flüssigkeit verstellen kann, um ein gewünschtes Niveau am Auslasssensor zu erreichen.

2. Vorrichtung nach Anspruch 1, welche Rezirkulierungsmittel aufweist, um die behandelte Flüssigkeit ein oder mehrmals durch die Magnetquelle zu leiten, um das gewünschte Polarisationsniveau zu erreichen.

3. Vorrichtung nach Anspruch 1 oder 2, **dadurch gekennzeichnet, dass** die Magnetquelle eine elektromagnetische Einheit ist.

4. Vorrichtung nach einem der vorstehenden Ansprüche, **dadurch gekennzeichnet, dass** die Magnetquelle vollständig die Flüssigkeitsströmungsleitungen umschließt.

5. Vorrichtung nach einem der vorstehenden Ansprüche, **dadurch gekennzeichnet, dass** die Magnetquelle Wicklungen in einzelnen oder mehrfachen Kreisen aufweist, und dass das Steuergerät derart programmiert ist, dass es die Wicklungen in ein einzelnes kontinuierliches Feld schaltet oder die Signale in Reihe durch die Flüssigkeit pulsierend leitet.

6. Vorrichtung nach Anspruch 1 oder 2, **dadurch gekennzeichnet, dass** die Magnetquelle ein Permanentmagnet mit Polarisationssteuerung ist.

7. Vorrichtung nach einem der Ansprüche 3 bis 6, **dadurch gekennzeichnet, dass** die Magnetquelle eine Kombination aus Permanentmagneten und Elektromagneten ist.

8. Vorrichtung nach einem der vorstehenden Ansprüche, **dadurch gekennzeichnet, dass** sie einen Strömungsmengensensor stromaufwärts der Magnetquelle einschließt.

9. Vorrichtung nach Anspruch 8, **dadurch gekennzeichnet, dass** der Strömungsmengensensor dem Steuergerät "Strömung" und "Nichtströmung" anzeigt.

10. Vorrichtung nach einem der vorstehenden Ansprüche, **dadurch gekennzeichnet, dass** der Einlasssensor Informationen sowohl für das Steuergerät als auch für den Auslasssensor erzeugt.

11. Vorrichtung nach einem der vorstehenden Ansprüche, **dadurch gekennzeichnet, dass** ein Ventil vorgesehen ist, um die Strömung durch die Vorrichtung zu steuern.

12. Vorrichtung nach Anspruch 11, **dadurch gekennzeichnet, dass** das Ventil verstellbar ist, um die Strömungsmenge durch die Vorrichtung zu verändern.

13. Vorrichtung nach Anspruch 12, **dadurch gekennzeichnet, dass** das Ventil ein Ein/Aus-Strömungsänderungsventil ist.

14. Vorrichtung nach einem der vorstehenden Ansprüche, **dadurch gekennzeichnet, dass** der Auslass für die polarisierte Flüssigkeit eine Mischdüse ist, welche ein oder mehrere weitere Flüssigkeitsströme aufnehmen kann.

15. Vorrichtung nach Anspruch 14, **dadurch gekennzeichnet, dass** die polarisierte Flüssigkeit Wasser ist, welches mit einem Konzentrat gemischt werden kann, das in der Mischdüse als weiterer Flüssigkeitsstrom empfangen wird, um ein daran anschließendes Mischgetränk zu erzeugen.

16. Vorrichtung nach einem der vorstehenden Ansprüche, welche stromabwärts des Einlasssensors Einspritzmittel aufweist, um Ionen zum Modifizieren der magnetischen Eigenschaften der Flüssigkeit einzuspritzen.

17. Vorrichtung nach Anspruch 16, welche Mittel zum Entfernen der Ionen zwischen dem Auslasssensor und dem Auslass aufweist.

18. Vorrichtung nach Anspruch 16 oder 17, **dadurch gekennzeichnet, dass** der Auslasssensor hinsichtlich des Niveaus an Ionen einen Feedback zur Steuereinrichtung erzeugt.

19. Vorrichtung nach einem der vorstehenden Ansprüche, **dadurch gekennzeichnet, dass**, wenn das Polarisationsniveau der Flüssigkeit am Auslasssensor ausserhalb voreingestellter Grenzen liegt, die Steuereinrichtung die Strömungsmenge der Flüssigkeitsströmung oder die Lineargeschwindigkeit des magnetischen Feldes ändern kann.

20. Vorrichtung nach einem der vorstehenden Ansprüche, welche Mittel zum Neutralisieren der Polarisation in der Einlassflüssigkeit aufweist.

21. Vorrichtung nach Anspruch 20, bei welcher das Mittel ein mechanisches Auftrennen oder Zerstäuben umfasst.

22. Vorrichtung nach einem der vorstehenden Ansprüche, **dadurch gekennzeichnet, dass** die Steuereinrichtung ein willkürliches magnetisches Feld in die Magnetquelle einleiten kann, um die Polarisationsniveaus zu verringern.

23. Vorrichtung nach einem der Ansprüche 1 bis 5 und 8 bis 22, **dadurch gekennzeichnet, dass** das elektromagnetische Feld bei Beginn der Strömung aktiviert wird und ansonsten abgeschaltet oder bei einem niedrigen Aufrechterhaltungswert gehalten wird.

24. Vorrichtung nach einem der vorstehenden Ansprüche, welche Mittel zum Einleiten von Gasbläschen in die Flüssigkeit zwischen dem Einlasssensor und der Magnetquelle aufweist.

25. Vorrichtung nach Anspruch 1, **dadurch gekennzeichnet, dass** stromabwärts der Magnetquelle ein Ventil vorgesehen ist, und dass die Steuereinrichtung betätigbar ist, das Ventil zu öffnen, wenn das gewünschte endgültige Polarisationsniveau erreicht ist.

## Revendications

1. Appareil pour polariser un fluide, l'appareil comprenant une admission de fluide pour l'eau entrante, un écoulement de fluide pour l'eau sortante, un premier capteur pour mesurer la polarisation du fluide entrant, une source magnétique, en aval du capteur d'admission, à travers laquelle s'écoule le fluide et un second capteur en aval de la source magnétique pour mesurer la polarisation du fluide sortant, les capteurs étant reliés à un contrôleur préprogrammé qui peut régler le niveau de puissance magnétique appliquée au fluide pour obtenir le niveau désiré au capteur de sortie.

2. Appareil selon la revendication 1, qui comprend des moyens de recyclage pour faire passer le fluide traité une ou plusieurs fois à travers la source magnétique pour obtenir le niveau de polarisation désiré.

3. Appareil selon la revendication 1 ou la revendication 2, dans lequel la source magnétique est une unité électromagnétique.

4. Appareil selon l'une quelconque des revendications précédentes, dans lequel la source magnétique enveloppe complètement les tuyaux d'écoulement du fluide.

5. Appareil selon l'une quelconque des revendications précédentes, dans lequel la source magnétique a des bobines disposées en circuit unique ou multiple et le contrôleur est programmé pour commuter les bobines en un seul champ continu ou pour faire onduler en série des signaux à travers le fluide.

6. Appareil selon la revendication 1 ou la revendication 2, dans lequel la source magnétique est un aimant permanent avec contrôle de polarisation.

7. Appareil selon l'une quelconque des revendications 3 à 6, dans lequel la source magnétique est une combinaison d'aimants permanents et d'électroaimants.

8. Appareil selon l'une quelconque des revendications précédentes, qui comprend un capteur de débit en amont de la source magnétique.

9. Appareil selon la revendication 8, dans lequel le capteur de débit signale au contrôleur les régimes « avec écoulement » et « sans écoulement ».

10. Appareil selon l'une quelconque des revendications précédentes, dans lequel le capteur d'entrée fournit des informations à la fois au contrôleur et au capteur de sortie.

11. Appareil selon l'une quelconque des revendications précédentes, dans lequel on a prévu une vanne pour contrôler l'écoulement à travers l'appareil.

12. Appareil selon la revendication 11, dans lequel la vanne est réglable pour faire varier le débit à travers l'appareil.

13. Appareil selon la revendication 12, dans lequel la vanne est une vanne de modulation d'écoulement entre ouvert et fermé.

14. Appareil selon l'une quelconque des revendications précédentes, dans lequel la sortie pour le fluide polarisé est un ajutage mélangeur, qui peut recevoir un ou plusieurs autres courants de fluide.

15. Appareil selon la revendication 14, dans lequel le fluide polarisé est de l'eau que l'on peut mélanger avec un concentré reçu en tant qu'autre courant de fluide dans l'ajutage mélangeur pour fournir une boisson post-mélange.

16. Appareil selon l'une quelconque des revendications précédentes, qui comprend des moyens d'injection en aval du capteur d'entrée pour injecter des ions afin de modifier les propriétés magnétiques du fluide.

17. Appareil selon la revendication 16, qui comprend des moyens pour éliminer les ions entre le capteur de sortie et la sortie.

18. Appareil selon la revendication 16 ou la revendication 17, dans lequel le capteur de sortie fournit des informations au contrôleur sur le niveau des ions.

19. Appareil selon l'une quelconque des revendications précédentes, dans lequel, là où le niveau de polarisation du fluide au capteur de sortie est en dehors de limites préétablies, le contrôleur peut faire varier le débit du fluide ou modifier la vitesse linéaire du champ magnétique.

20. Appareil selon l'une quelconque des revendications précédentes, qui comprend des moyens pour neutraliser la polarisation dans le fluide d'entrée.

21. Appareil selon la revendication 20, dans lequel les moyens comprennent un cisaillement mécanique ou une atomisation.

22. Appareil selon l'une quelconque des revendications précédentes, dans lequel le contrôleur peut introduire un champ magnétique aléatoire dans la source magnétique pour réduire les niveaux de polarisation.

23. Appareil selon l'une quelconque des revendications 1 à 5 et 8 à 22, dans lequel le champ magnétique est déclenché quand commence l'écoulement et autrement est éteint ou commuté à un faible niveau d'entretien.

24. Appareil selon l'une quelconque des revendications précédentes, qui comprend des moyens pour introduire des bulles gazeuses dans le fluide entre le capteur d'entrée et la source magnétique.

25. Appareil selon la revendication 1, dans lequel on a prévu une vanne en aval de la source magnétique et on peut utiliser le contrôleur pour ouvrir la vanne quand on a obtenu le niveau de polarisation finale désiré.
